# EUROPEAN PATENT APPLICATION

(11) **EP 4 329 073 A1**
(43) Date of publication of application: **28.02.2024**
(21) Application number: 22901773.6
(22) Date of filing: 30.11.2022
(51) Int. Cl.: H01M 50/358, H01M 50/211

(54) **BATTERY MODULE AND BATTERY PACK INCLUDING SAME**

(30) Priority: 03.12.2021 KR 20210171713
(71) Applicant: LG Energy Solution, Ltd., Seoul 07335 (KR)
(72) Inventor: YOON, Doohan, Daejeon 34122 (KR); AHN, Moon Youl, Daejeon 34122 (KR)
(74) Representative: Plasseraud IP
(86) International application number: PCT/KR2022/019203
(87) International publication number: WO 2023/101415

(57) **Abstract**

A battery module according to one embodiment of the present disclosure includes a housing that houses a battery cell stack in which a plurality of battery cells are stacked and includes a pair of holes disposed opposite to each other; and a discharge guide member that forms a gas flow path inside and outside the housing while covering any one of the pair of holes.

## Description

### [TECHNICAL FIELD]

### Cross Citation with Related Application(s)

This application claims the benefit of Korean Patent Application No. 10-2021-0171713 filed on December 3, 2021 with the Korean Intellectual Property Office, the entire contents of which are incorporated herein by reference.

The present disclosure relates to a battery module and a battery pack including the same, and more particularly, to a battery module having an improved exhaust gas path, and a battery pack including the same.

### [BACKGROUND]

With the technology development and increased demand for mobile devices, demand for secondary batteries as energy sources has been rapidly increasing. A variety of researches on secondary batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera and a laptop computer.

Recently, along with a continuous rise of the necessity for a large-capacity secondary battery, including the utilization of the secondary battery as an energy storage source, there is a growing demand for a battery pack of middle- or large-sized module which is an assembly of battery modules in which a plurality of secondary batteries are connected in series/parallel.

Meanwhile, when a plurality of battery cells are connected in series/parallel to configure a battery pack, it is common to configure a battery module composed of at least one battery cell and then configure a battery pack by using at least one battery module and adding other components (e.g., electronic device). Since the battery cells constituting such middle or large-sized battery modules are composed of chargeable/dischargeable secondary batteries, a large amount of heat is generated in a charge and discharge process.

Typically, the battery module includes a battery cell stack in which a plurality of battery cells are stacked, a frame that houses the battery cell stack, and end plates that are connected to the frame so as to cover the front and rear surfaces of the battery cell stack.

The frame and the end plate may be coupled so as to be sealed by welding. In the case where the frame for housing the battery cell stack, and the end plate are coupled in this way, if the internal pressure of the battery cell increases when the battery module is overcharged, and exceeds the welding strength limit value of the battery cell, high-temperature heat, gas, and flame generated in the battery cell can be discharged to the outside of the battery cell.

At this time, high-temperature heat, gas and flame can be discharged through openings formed in the end plate. In a battery pack structure in which a plurality of battery modules are arranged so that the end plates face each other, it can affect battery modules adjacent to the battery module emitting high temperature heat, gases and flames.

This may damage the terminal bus bar disposed at the end plate of the adjacent battery module, and high-temperature heat, gas, and flame may enter the inside of a battery module through an opening disposed at the end plate of an adjacent battery module, and damage a plurality of battery cells.

### [DETAILED DESCRIPTION OF THE INVENTION]

### [Technical Problem]

It is an object of the present disclosure to provide a battery module configured to impart directionality to gas discharged from the battery module, and a battery pack including the same.

However, the technical problem to be solved by embodiments of the present disclosure is not limited to the above-described problems, and can be variously expanded within the scope of the technical idea included in the present disclosure.

### [Technical Solution]

According to one aspect of the present disclosure, there is provided a battery module comprising: a housing that houses a battery cell stack in which a plurality of battery cells are stacked and includes a pair of holes disposed opposite to each other; and a discharge guide member that forms a gas flow path inside and outside the housing while covering any one of the pair of holes.

The housing may comprise a module frame that includes openings disposed opposite to an inner space for housing the battery cell stack; and a first end plate and a second end plate that are coupled to the module frame while covering the openings, respectively.

The pair of holes comprises a first hole provided in the first end plate, and a second hole provided in the second end plate, and the discharge guide member may be mounted in the housing while covering any one hole of the first hole and the second hole.

The discharge guide member may comprise an inner space that communicates with any one of the holes and an outlet port that exposes the inner space to the outside of the housing, and comprise a cover that is mounted on any one end plate of the first end plate and the second end plate.

The module frame has a square tubular shape that includes a pair of wide surfaces disposed opposite to each other and a pair of narrow surfaces disposed opposite to each other, and the cover is mounted on any one of the end plates, with the outlet port being disposed on at least one of the four surfaces of the module frame.

An area of the outlet port may be smaller than an area of any one of the holes, for example, a second hole.

A gas discharge direction that is discharged through the outlet port from the inside of the housing, and a gas discharge direction that is discharged through the other one of the first hole and the second hole from the inside of the housing may be configured to face in the same direction.

The cover may comprise a first cover part that has a first inner space configured such that gas discharged through any one of the holes is guided in a first direction, and is fixed to the one of the end plates; and a second cover part that has a second inner space configured such that gas discharged through the first inner space is guided in a second direction and discharged through the outlet port, and is connected to the first cover part.

The second cover part may be fixed to any one surface of the module frame , for example, one of a pair of wide surfaces.

A flame arresting member may be mounted in at least one of the first hole, the second hole, and the outlet port.

In the battery module according to another aspect of the present disclosure, the housing comprises a module frame that has an opening and houses the battery cell stack therein; and an end plate that is coupled to the module frame while covering the opening, and the pair of holes may comprise a first hole provided in the end plate; and a second hole provided in a portion of the module frame disposed opposite to the end plate.

The discharge guide member may comprise an inner space that communicates with the second hole, and an outlet port that exposes the inner space to the outside of the housing, and comprises a cover that is mounted on a portion of the module frame.

The module frame has a square tubular shape that includes a pair of wide surfaces disposed opposite to each other, a pair of narrow surfaces disposed opposite to each other, and a side surface provided with the second opposite to the opening, and the cover may be mounted on the side surface of the module frame, with the outlet port being disposed on at least one of the pair of wide surfaces and the pair of narrow surfaces.

An area of the outlet port may be smaller than an area of the second hole.

A gas discharge direction that is discharged through the outlet port from the inside of the housing, and a gas discharge direction that is discharged through the first hole from the inside of the housing may be configured to face in the same direction.

The cover may comprise a first cover part that has a first inner space configured such that gas discharged through the second hole is guided in a first direction, and is fixed to a side surface of the module frame, and a second cover part that has a second inner space configured such that gas discharged through the first inner space is guided in a second direction and discharged through the outlet port, and is connected to the first cover part.

The second cover part may be fixed to at least one surface of a pair of wide surfaces and a pair of narrow surfaces of the module frame.

A flame arresting member may be mounted in at least one of the first hole, the second hole, and the outlet port.

According to another aspect of the present disclosure, there is provided a battery pack comprising: a plurality of battery modules as described above, and a pack frame that surrounds the plurality of battery modules. A first battery module and a second battery module aligned along one direction among the plurality of battery modules may be disposed so that their respective discharge guide members face each other.

### [Advantageous Effects]

A battery module according to embodiments of the present disclosure may allow gas generated from a battery cell to flow directionally in case of an emergency of the battery cells such as thermal runaway. Accordingly, when configuring a battery pack with the battery module of the embodiments, high-temperature gas discharged from one battery module can prevent from being discharged toward another battery module, thereby preventing the battery module from being damaged by the exhaust gas and shortening its lifespan.

Furthermore, when the battery module according to the embodiments includes a flame arresting member, it is possible to increase the rate at which the flame contained in the guided exhaust gas passes through the flame arresting member, thereby improving the flame arresting effect.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a battery module according to one embodiment of the present disclosure;
Fig. 2 is a perspective view of a battery cell included in the battery module of Fig. 1;
Fig. 3 is a partially exploded perspective view showing the battery module of Fig. 1;
Fig. 4 is a cross-sectional view showing the battery module of Fig. 1;
Fig. 5 is a diagram showing a battery pack including a battery module according to one embodiment of the present disclosure;
Fig. 6 is a partially exploded perspective view showing a battery module according to another embodiment of the present disclosure;
Fig. 7 is a partially exploded perspective view showing a battery module according to another embodiment of the present disclosure; and
Fig, 8 is a perspective view showing a combined state of the battery module of Fig. 7.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

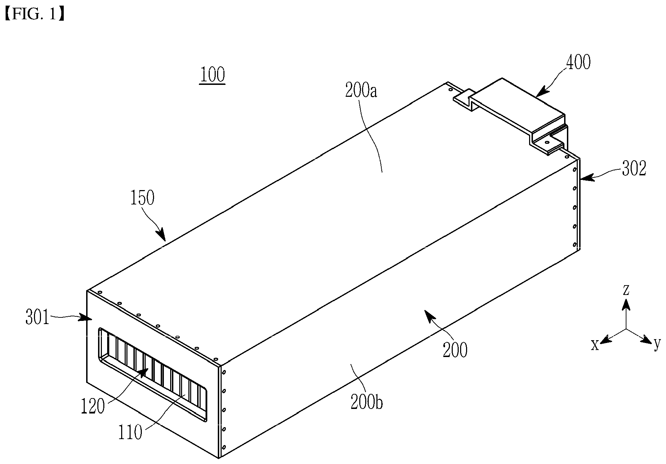

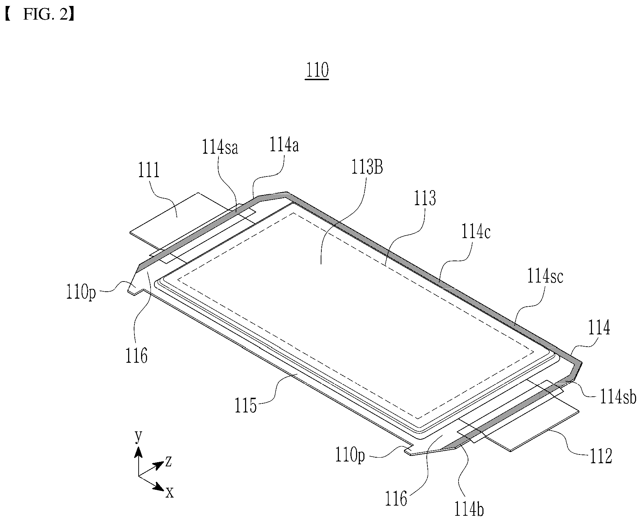

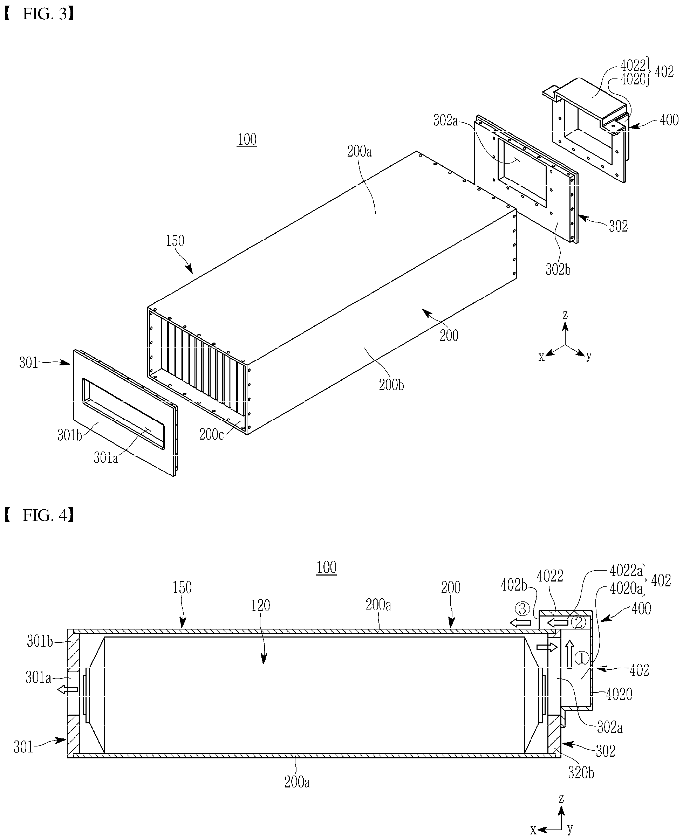

Fig. 1 is a perspective view showing a battery module according to one embodiment of the present disclosure. Fig. 2 is a perspective view of a battery cell included in the battery module of Fig. 1. Fig. 3 is a partially exploded perspective view showing the battery module of Fig. 1. Fig. 4 is a cross-sectional view showing the battery module of Fig. 1.

A battery module according to one embodiment is configured to directionally discharge high-temperature heat, gas, or flame generated from a battery cell during thermal runaway.

Referring to Figs. 1 to 4, the battery module 100 according to one embodiment of the present disclosure includes a battery cell stack 120 in which a plurality of battery cells 110 are stacked, and a housing 150 that houses the battery cell stack 120.

Looking at the structure of one battery cell 110 with reference to Fig. 2, the battery cell 110 is a secondary battery and can be configured as a pouch-type secondary battery. The battery cell 110 may include an electrode assembly 113, a cell case 114, and electrode leads 111 and 112 protruding from the electrode assembly 113.

The electrode assembly 113 may be composed of a positive electrode plate, a negative electrode plate, a separator, and the like. The cell case 114 is for packaging the electrode assembly 113, and can be composed of a laminated sheet including a resin layer and a metal layer. The cell case 114 may include a case main body 113B and a cell terrace 116.

The case main body 113B may house the electrode assembly 113. For this purpose, the case main body 113B is provided with a housing space capable of housing the electrode assembly 113. The cell terrace 116 extends from the case main body 113B and may be sealed so as to seal the electrode assembly 113.

The electrode leads 111 and 112 can be electrically connected to the electrode assembly 113. Such electrode leads 111 and 112 may be provided in a pair including a negative electrode lead 111 and a positive electrode lead 112. A portion of the pair of electrode leads 111 and 112 may protrude out of the cell terrace 116 from the front (+x-axis direction) and the rear (-x-axis direction) of the cell case 114, respectively.

Meanwhile, the battery cell 110 can be produced by sealing both end parts 114a and 114b of a cell case 114 and one side part 114c connecting them in a state in which an electrode assembly 113 is housed in a cell case 114. In other words, the battery cell 110 according to the present embodiment has a total of three sealing parts 114sa, 114sb and 114sc, the sealing parts 114sa, 114sb and 114sc have a structure that is sealed by a method such as heat-sealing, and the remaining other side part may be composed of a connection part 115.

In addition, the connection part 115 may extend long along one edge of the battery cell 110, and a protrusion 110p of the battery cell 110 called a bat-ear can be formed at an end part of the connection part 115. Further, the cell case 114 may be sealed with the protruding electrode leads 111 and 112 being interposed therebetween.

The structure of the battery cell 110 described above is one example, and the shape of the battery cell 110 for configuring the battery cell stack can be variously modified.

Referring again to Figs. 1 to 4, the battery cells 110 may be formed in plural numbers, and the plurality of battery cells 110 can be stacked so as to be electrically connected to each other by bus bars (not shown), thereby forming a battery cell stack 120.

The housing 150 in which the battery cell stack 120 is housed may include a module frame 200, a first end plate 301 and a second end plate 302.

The module frame 200 may be formed of a square tubular frame composed of a pair of wide surfaces 200a and a pair of narrow surfaces 200b. Thereby, the module frame 200 may have a housing space in which the battery cell stack 120 can be housed, and may have a structure in which openings 200c are disposed opposite to each other along the longitudinal direction (x). Such a module frame 200 may be formed by extrusion molding, or may be configured such that the plate materials forming the wide surface 200a and the narrow surface 200b are connected to each other by welding or coupling means such as screws and rivets.

The first end plate (or front end plate) 301 and the second end plate (or rear end plate) 302 are fixed to both end parts of the module frame 200 through welding or the like while covering the opening 200c of the module frame 200, thereby covering both surfaces, e.g., the front and rear surface, of the battery cell stack 120.

The first end plate 301 and the second end plate 302 each include holes 301a and 302a functioning as a venting part. Here, the venting part refers to a part for discharging heat or gas inside the battery module 100 and flame contained in the gas to the outside of the battery module 100.

The respective holes 301a and 302a can be provided with a certain size and shape in the main body 301b of the first end plate 301 and the main body of the second end plate 302. In this embodiment, since the first and second end plates 301 and 302 are formed in a long rectangular shape in a direction(y) perpendicular to the longitudinal direction (x) of the housing 150, so that the holes 301a and 302a also have a rectangular shape correspondingly thereto. At this time, the first hole 301a of the first end plate 301 and the second hole 302a of the second end plate 302 may have the same size and shape, or may have different sizes and shapes. This embodiment is the latter case.

In a state where the first end plate 301 and the second end plate 302 are mounted in the module frame 200, the first hole 301a of the first end plate 301 and the second hole 302a of the second end plate 302 are disposed opposite to each other, and a discharge guide member 400 is mounted on one end plate of the first end plate 301 and the second end plate 302.

In this embodiment, the discharge guide member 400 is mounted on the second end plate 302 while covering the second hole 302a of the second end plate 302.

The discharge guide member 400 includes a cover 402 that has an inner space 402a communicating with the second hole 302a and an outlet port 402b exposing the inner space 402a to the outside of the housing 150.

More specifically, the cover 402 includes, for example, a first cover part 4020 having a first internal space 4020a configured such that the gas discharged from the battery cell 110 and discharged from the second hole (302a) is guided in a first direction (see the direction of arrow ① shown in Fig. 4), and a second cover part 4022 having a second internal space 4022a configured such that the gas discharged from the first internal space 4020a is guided in a second direction (see the direction of arrow ② shown in Fig. 4).

The first cover part 4020 and the second cover part 4022 may be formed as a monolithic structure connected to each other such that the first inner space 4020a and the second inner space 4022a are continuously extended. At this time, the outlet port 402b may be configured in a shape in which one side end of the second cover part 4022 is opened, but the structure of the outlet port is not necessarily limited thereto.

The cover 402 is fixed to the second end plate 302 while the first cover part 4020 entirely covers the second hole 302a, and the second cover part 4022 is fixed to the wide surface 200a so that the outlet port 402b is disposed on the upper surface of the module frame 200, that is, on one of the pair of wide surfaces 200a (one surface disposed on the upper side in the figure), which can be mounted in the housing 150. In a state where the cover 402 is mounted in the housing 150, an area of the outlet port 402b may be smaller than an area of the second hole 302a of the second end plate 302.

According to the fixation state of the cover 402, the outlet port 402b is placed in the direction toward the first end plate 301, whereby the gas flowing through the inner space 402a of the cover 402 can be discharged in a direction toward the first end plate 301 through the outlet port 402b.

In other words, a gas discharge direction (see the direction of arrow ③ shown in Fig. 4) that is discharged through the outlet port 402b from the inside of the housing 150, and a gas discharge direction (see the direction of arrow ④ shown in Fig. 4) that is discharged through the first hole 310a from the inside of the housing can face in the same direction (left direction with respect to Fig. 4).

In this manner, the cover 402, that is, the discharge guide member 400 may form a gas flow path inside and outside the housing 150.

Meanwhile, in the present embodiment, the outlet port 402b of the cover 402 is illustrated as being disposed on the upper wide surface 200a of the module frame 200, but the position of the outlet port 402b is not necessarily limited thereto.

The outlet port 402b may be disposed on at least one of four surfaces of the module frame 200, for example, on the narrow surface 200b of the module frame 200, and can be placed on both the wide surface 200a and the narrow surface 200b.

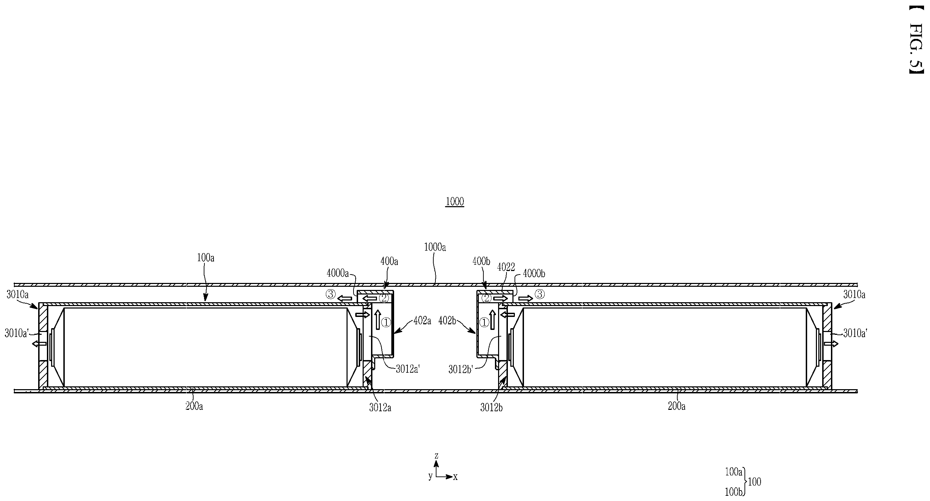

Fig. 5 is a diagram showing a battery pack 1000 according to one embodiment of the present disclosure.

The battery pack 1000 may include a plurality of, e.g., two or more, battery modules 100 described above. The battery modules 100 can be housed in a pack frame 1000a, and various control and protection systems such as a BMS (battery management system) and a cooling system can be mounted together in the pack frame 1000a.

Among the plurality of battery modules 100, the first battery module 100a and the second battery module 100b may be aligned such that the discharge guide members 400a and 400b face along one direction (x).

Specifically, the first battery module 100a is disposed such that the outlet port 4000a of the cover 410a, which is the discharge guide member 400a, faces in the -x-axis direction, and the second battery module 100b is disposed such that the outlet port 4000b of the cover 412b, which is the discharge guide member 400b, faces in the +x-axis direction.

In such a battery pack 1000, when the battery module 100 is in an abnormal state, e.g., when gas is discharged from the battery cells of the battery module 100, gas flowing toward the first holes 3010a' or 3010b' of the first end plates 3010a and 3010b from the inside of the battery modules 100a and 100b can be discharged to the outside of the battery modules 100a and 100b through the first holes 3010a' or 3010b'.

In addition, gas flowing toward the second holes 3012a' and 3012b' of the second end plates 3012a and 3012b from the inside of the battery modules 100a and 100b collides with the covers 410a and 412b, so that a part flows toward the first holes 3010a' and 3010b' of the first end plates 3010a and 3010b, and is discharged to the outside of the battery modules 100a and 100b through these holes, and a part can be discharged to the outside of the battery modules 100a and 100b through the outlet ports 4000a and 4000b of the covers 410a and 412b.

At this time, the gas discharged through the outlet port 4000a of the first battery module 100a does not flow toward the second battery module 100b but flows in the opposite direction, and gas discharged through the outlet port 4000b of the second battery module 100b does not flow toward the first battery module 100a but flows in the opposite direction, thereby being able to escape to the outside of the pack frame 1000a. Therefore, the battery pack 1000 according to the embodiment can prevent from being damaged by the gas discharged from each of the battery modules 100a and 100b.

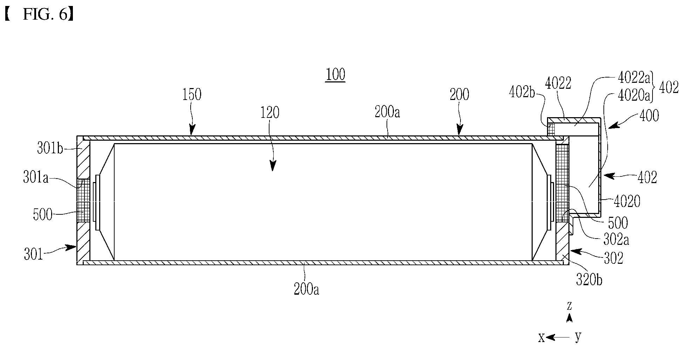

As shown in Fig. 6, in the case where a flame arresting member (or fire arresting member) 500 is mounted in the first hole 301a of the first end plate 301, the second hole 302a of the second end plate 302, and the outlet port 402b of the cover 402, if the flame is included in the gas discharged through the first and second holes 301a and 302a and the outlet port 402b, the flames can be further blocked. Such a flame arresting member 500 may be configured with a mesh structure made of copper material having good thermal conductivity.

Fig. 6 shows a state in which the flame arresting member 500 is mounted in the first hole 301a of the first end plate 301, the second hole 302a of the second end plate 302, and the outlet port 402b of the cover 402, but the present disclosure is not necessarily limited thereto, and a flame arresting member may be mounted in at least one of the first hole 301a, the second hole 302a, and the outlet port 402b.

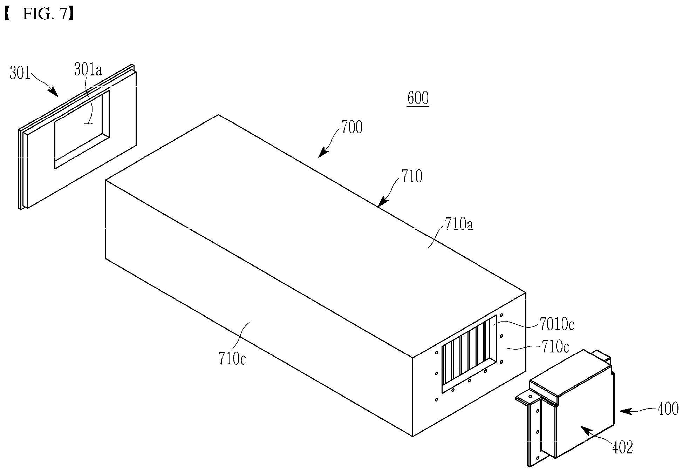

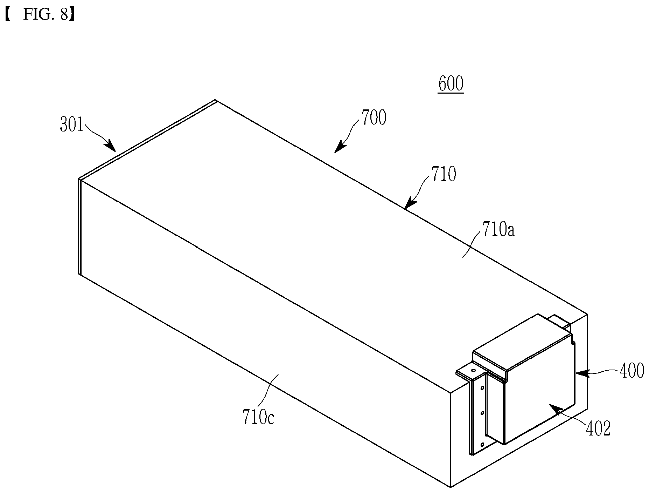

Fig. 7 is a partially exploded perspective view showing a battery module 600 according to another embodiment of the present disclosure, and Fig, 8 is a perspective view showing a combined state of the battery module of Fig. 7. The structures of the battery modules 600 of Figs. 7 and 8 are the same as those of the battery modules 100 of Figs. 1 and 3, but differ only in the structure of the module frame of the housing. Hereinafter, for convenience of explanation, only the module frame of the housing will be described in detail, and the same reference numerals will be used for the same elements as those of the battery modules 100 of Figs. 1 and 3.

The module frame 710 of the housing 700 according to the embodiments of Figs. 7 and 8 is formed of a square tubular structure consisting of a combination of a pair of wide surfaces 710a, a pair of narrow surfaces 710b and a side surface 710c. Accordingly, a portion of the module frame 710 facing the side surface 710c is configured as an opening. In addition, a second hole 7010c is provided on the side surface 710c of the module frame 710. The second hole 7010c may have a size and shape corresponding to the second hole 302a provided in the second end plate 302 of Figs. 1 and 3. The module frame 710 may be configured as a monolith through press processing or the like.

A first end plate 301 is disposed and fixed to the module frame 710 on the opening side, and a cover 402, which is a discharge guide member 400, is fixed to the side surface 710c of the module frame 710 while covering the second hole 7010c.

The battery module 600 of Figs. 7 and 8 configured as described above is also configured as a battery pack as shown in Fig. 5 and can reduce or prevent damage caused by gas discharged from the battery module 600.

In addition, since the flame arresting member shown in Fig. 6 can be applied even to the battery module 600 of Figs. 7 and 8, damage to the battery module due to flame can also be prevented.

The battery module or battery pack according to the embodiments as set forth above can be applied to various devices. Such a device can be applied to a vehicle means such as an electric bicycle, an electric vehicle, or a hybrid vehicle, but the present disclosure is not limited thereto, and is applicable to various devices that can use a secondary battery.

Although preferred embodiments of the present disclosure have been described in detail above, the scope of the present disclosure is not limited thereto, and various modifications and improvements can be made by those skilled in the art using the basic concepts of the present disclosure as defined in the appended claims, which also falls within the scope of the present disclosure.

### [Description of Reference Numerals]

100, 600: battery module
120: battery cell stack
150, 700: housing
200, 710: module frame
301: first end plate
302: second end plate
301a: first hole
302a, 7010c: second hole
710c: side surface

## Claims

1. A battery module comprising:
a housing that houses a battery cell stack in which a plurality of battery cells are stacked and includes a pair of holes disposed opposite to each other; and
a discharge guide member that forms a gas flow path inside and outside the housing while covering any one of the pair of holes.

2. The battery module according to claim 1, wherein:
the housing comprises a module frame that includes openings disposed opposite to an inner space for housing the battery cell stack; and a first end plate and a second end plate that are coupled to the module frame while covering the openings, respectively,
the pair of holes comprises a first hole provided in the first end plate; and a second hole provided in the second end plate, and
the discharge guide member is mounted in the housing while covering any one hole of the first hole and the second hole.

3. The battery module according to claim 2, wherein:
the discharge guide member,
comprises an inner space that communicates with any one of the holes and an outlet port that exposes the inner space to the outside of the housing, and comprise a cover that is mounted on any one end plate of the first end plate and the second end plate.

4. The battery module according to claim 3, wherein:
the module frame has a square tubular shape that includes a pair of wide surfaces disposed opposite to each other and a pair of narrow surfaces disposed opposite to each other, and
the cover is mounted on any one of the end plates, with the outlet port being disposed on at least one of the four surfaces of the module frame.

5. The battery module according to claim 4, wherein:
an area of the outlet port is smaller than an area of any one of the holes.

6. The battery module according to claim 4, wherein:
a gas discharge direction that is discharged through the outlet port from the inside of the housing, and a gas discharge direction that is discharged through the other one of the first hole and the second hole from the inside of the housing are configured to face in the same direction.

7. The battery module according to claim 3, wherein:
the cover comprises a first cover part that has a first inner space configured such that gas discharged through any one of the holes is guided in a first direction, and is fixed to the one of the end plates; and a second cover part that has a second inner space configured such that gas discharged through the first inner space is guided in a second direction and discharged through the outlet port, and is connected to the first cover part.

8. The battery module according to claim 7, wherein:
the second cover part is fixed to any one surface of the module frame.

9. The battery module according to claim 3, wherein:
a flame arresting member is mounted in at least one of the first hole, the second hole, and the outlet port.

10. The battery module according to claim 1, wherein:
the housing comprises a module frame that has an opening and houses the battery cell stack therein; and an end plate that is coupled to the module frame while covering the opening, and
the pair of holes comprises a first hole provided in the end plate; and a second hole provided in a portion of the module frame disposed opposite to the end plate.

11. The battery module according to claim 10, wherein:
the discharge guide member comprises an inner space that communicates with the second hole, and an outlet port that exposes the inner space to the outside of the housing, and comprises a cover that is mounted on a portion of the module frame.

12. The battery module according to claim 11, wherein:
the module frame has a square tubular shape that includes a pair of wide surfaces disposed opposite to each other, a pair of narrow surfaces disposed opposite to each other, and a side surface provided with the second hole opposite to the opening, and
the cover is mounted on a side surface of the module frame, with the outlet port being disposed on at least one of the pair of wide surfaces and the pair of narrow surfaces.

13. The battery module according to claim 12, wherein:
an area of the outlet port is smaller than an area of the second hole.

14. The battery module according to claim 12, wherein:
a gas discharge direction that is discharged through the outlet port from the inside of the housing, and a gas discharge direction that is discharged through the first hole from the inside of the housing are configured to face in the same direction.

15. The battery module according to claim 11, wherein:
the cover comprises a first cover part that has a first inner space configured such that gas discharged through the second hole is guided in a first direction, and is fixed to a side surface of the module frame; and a second cover part that has a second inner space configured such that gas discharged through the first inner space is guided in a second direction and discharged through the outlet port, and is connected to the first cover part.

16. The battery module according to claim 15, wherein:
the second cover part is fixed to at least one surface of a pair of wide surfaces and a pair of narrow surfaces of the module frame.

17. The battery module according to claim 11, wherein:
a flame arresting member is mounted in at least one of the first hole, the second hole, and the outlet port.

18. A battery pack comprising:
a plurality of battery modules according to any one of claims 1 to 9; and
a pack frame that surrounds the plurality of battery modules,
wherein a first battery module and a second battery module aligned along one direction among the plurality of battery modules are disposed so that their respective discharge guide members face each other.

19. A battery pack comprising:
a plurality of battery modules according to any one of claims 10 to 17; and
a pack frame that surrounds the plurality of battery modules,
wherein a first battery module and a second battery module aligned along one direction among the plurality of battery modules are disposed so that their respective discharge guide members face each other.
